# EUROPÄISCHE PATENTANMELDUNG

(11) **EP 1 074 871 A2**
(43) Veröffentlichungstag der Anmeldung: **07.02.2001**
(21) Anmeldenummer: 00116730.3
(22) Anmeldetag: 03.08.2000
(51) Int. Cl.: G02B 13/00, G02B 3/00

(54) **Optische Abbildungsvorrichtung**

(30) Priorität: 05.08.1999 DE 19936230
(71) Anmelder: Lissotschenko, Vitalij, Dr., 44149 Dortmund (DE); Hentze, Joachim, 59457 Werl (DE)
(72) Erfinder: Mikhailov, Alexei, 44227 Dortmund (DE)
(74) Vertreter: Basfeld, Rainer, Dr. Dipl.-Phys.

(57) **Zusammenfassung**

Abbildungsvorrichtung für die Abbildung von Gegenständen (5) derart, daß ein von der Abbildungsvorrichtung erzeugtes Bild (6) im wesentlichen die gleichen Abmessungen aufweist wie der abzubildende Gegenstand (5), wobei die Abbildungsvorrichtung mindestens vier optisch funktionale zu der Abbildung beitragende Flächen (8, 10, 11, 12, 13, 14) umfaßt, wobei sämtliche optisch funktionale Flächen (8, 10, 11, 12, 13, 14) eine zylinderlinsen- oder zylinderlinsenähnliche Geometrie aufweisen, wobei mindestens vier optisch funktionale zu der Abbildung beitragende Flächen (11, 12, 13, 14) im wesentlichen zueinander parallele Zylinderachsen aufweisen und wobei die Abbildungsvorrichtung mindestens eine weitere optisch funktionale zu der Abbildung beitragende Fläche (8, 10) umfaßt, deren Zylinderachse zu den Zylinderachsen der mindestens vier parallel orientierten Flächen (11, 12, 13, 14) etwa senkrecht ausgerichtet ist.

## Beschreibung

Die vorliegende Erfindung betrifft eine Abbildungsvorrichtung, insbesondere für die Abbildung von Gegenständen derart, daß ein von der Abbildungsvorrichtung erzeugtes Bild im wesentlichen die gleichen Abmessungen aufweist, wie der abzubildende Gegenstand, wobei die Abbildungsvorrichtung mindestens vier optisch funktionale zu der Abbildung beitragende Flächen umfaßt.

Abbildungsvorrichtungen der vorgenannten Art werden in der Regel zu sogenannten 1:1-Abbildungen verwendet, das heißt, zu Abbildungen, bei denen Gegenstand und Bild die gleiche Größe und die gleiche Ausrichtung aufweisen. Um die gleiche Größe und die gleiche Ausrichtung von Gegenstand und Bild zu erreichen müssen mindestens vier optisch funktionale Flächen zu der Abbildung beitragen, wobei gemäß dem Stand der Technik in der Regel sphärische Linsen Verwendung finden, wobei beispielsweise zwei in Strahlrichtung äußere konvexe sphärische Flächen und zwei in Strahlrichtung innere konkave sphärische Flächen Verwendung finden können. Derartige Anordnungen erweisen sich insbesondere dann als nachteilig, wenn der abzubildende Gegenstand von einer langgestreckten Lichtquelle gebildet wird, die aus einzelnen voneinander nur wenig beabstandeten Abschnitten besteht. Eine derartige Lichtquelle könnte beispielsweise ein Laserdiodenbarren sein, der in seiner Längsrichtung in regelmäßigen Abständen voneinander beabstandete schmale Emissionsstreifen aufweist. Wenn mit den vorgenannten beispielsweise aus vier sphärischen Linsenflächen bestehenden Abbildungsvorrichtungen das Licht einer derartigen streifenförmigen strukturierten Lichtquelle 1:1 abgebildet werden soll, ergibt sich dabei zum einen nur eine relativ geringe Intensität der einzelnen Abschnitte des Bildes. Weiterhin werden in einem nicht vertretbaren hohen Maße von unterschiedlichen Abschnitten der langgestreckten Lichtquelle ausgehende Lichtstrahlen in ein und demselben Abschnitt in der Bildebene miteinander vereint, so daß nur eine sehr unsaubere 1:1-Abbildung vorliegt.

Das der vorliegenden Erfindung zugrundeliegende Problem ist die Schaffung einer Abbildungsvorrichtung der eingangs Art, die effektiver langgestreckte Gegenstände abbilden kann.

Dies wird erfindungsgemäß dadurch erreicht, daß sämtliche optisch funktionale Flächen eine Zylinderlinsen- oder eine zylinderlinsenähnliche Geometrie aufweisen, wobei mindestens vier optisch funktionale zu der Abbildung beitragende Flächen im wesentlichen zueinander parallele Zylinderachsen aufweisen und wobei die Abbildungsvorrichtung mindestens eine weitere optisch funktionale zu der Abbildung beitragende Fläche umfaßt, deren Zylinderachse zu den Zylinderachsen der mindestens vier parallel orientierten Flächen etwa senkrecht ausgerichtet ist. Um mit einer derartigen Abbildungsvorrichtung einen langgestreckten beispielsweise als in ihrer Längsrichtung strukturierte Lichtquelle ausgeführten Gegenstand abzubilden, erweist es sich als sinnvoll, die Zylinderachsen der vier beispielsweise hintereinanderliegenden im wesentlichen zueinander parallelen optisch funktionalen Flächen in einer Richtung senkrecht zur Längserstreckung des Gegenstandes auszurichten. Es kann sich bei den optisch funktionalen Flächen beispielsweise um konvex geformte Flächen handeln. Durch die derart ausgerichteten vier in Strahlrichtung hintereinanderliegenden Flächen wird mit relativ hoher Effektivität ein Bild des Gegenstandes erzeugt, das einer 1:1-Abbildung in Richtung der Längserstreckung des Gegenstandes entspricht.

Durch die mindestens eine weitere optisch funktionale Fläche, deren Zylinderachse senkrecht zu den Zylinderachsen der mindestens vier im wesentlichen zueinander parallelen optisch funktionalen Flächen ausgerichtet ist, wird eine 1:-1-Abbildung des Gegenstandes in einer Richtung senkrecht zu der Längserstreckung des Gegenstandes derart erzielt, daß der Gegenstand in der Bildebene in der Richtung senkrecht zur Längserstreckung des Gegenstandes beziehungsweise des Bildes ein Stück weit versetzt ist. Die Strecke, um die das Bild senkrecht zu seiner Längserstreckung versetzt ist, entspricht im wesentlichen der Ausdehnung des Gegenstandes beziehungsweise des Bildes in dieser Richtung. Insbesondere wenn es sich um eine annähernd linienförmige Lichtquelle handelt, ist eine derartige Verschiebung des Bildes für die meisten Anwendungen durchaus tolerierbar.

Es erweist sich hierbei als vorteilhaft, wenn jeweils zwei der mindestens vier optisch funktionalen zu der Abbildung beitragenden im wesentlichen parallel zueinander orientierten Flächen zu einer eingangs- und ausgangsseitig mit einer optisch funktionalen Fläche versehenen Zylinderlinse beziehungsweise einem eingangs- und ausgangsseitig mit einer optisch funktionalen Fläche versehenen Zylinderlinsenarray zusammengefaßt sind. Hierbei weisen vorzugsweise genau vier zu der Abbildung beitragende optisch funktionale Flächen im wesentlichen zueinander parallele Zylinderachsen auf, wobei vorteilhafterweise von den genau vier optisch funktionalen Flächen mit den wesentlichen parallelen Zylinderachsen zwei Zylinderlinsenarrays gebildet werden, deren jeweilige optisch funktionale Flächen in nebeneinander angeordnete zylinderlinsenähnliche Abschnitte unterteilt sind. Diese zylinderlinsenähnlichen Abschnitte der Zylinderlinsenarrays sind vorzugsweise in Richtung der Längserstreckung des langgestreckten Gegenstandes nebeneinander angeordnet. Durch die Wahl von Zylinderlinsenarrays mit nebeneinander angeordneten Zylinderlinsen oder zylinderlinsenähnlichen Abschnitten kann die Abbildungsvorrichtung entsprechend flach gebaut werden bei trotzdem ausreichender Abbildungseffektivität.

Gemäß einer bevorzugten Ausführungsform der vorliegenden Erfindung sind zwei weitere optisch funktionale zu der Abbildung beitragende Flächen mit zu den Zylinderachsen der mindestens vier parallel orientierten Flächen etwa senkrecht ausgerichteten Zylinderachsen vorgesehen, wobei vorteilhafterweise die beiden weiteren zur Abbildung beitragenden optisch funktionalen Flächen jeweils derart an den Außenseiten der Abbildungsvorrichtung angeordnet sind, daß sich die vier im wesentlichen parallel zueinander ausgerichteten zu der Abbildung beitragenden optisch funktionalen Flächen zwischen ihnen befinden. Auf diese Weise kann erreicht werden, daß insbesondere bei in ihrer Längsrichtung strukturierten langgestreckten als Gegenstand dienenden Lichtquellen die von einzelnen Abschnitten dieser Lichtquellen ausgesandten Lichtstrahlen der in Bildebene nur wenig überlappen, so daß eine ausgesprochen hohe Abbildungseffektivität beziehungsweise Abbildungsqualität erzielt wird.

Alternativ dazu besteht die Möglichkeit, nur eine zu den vier im wesentlichen zueinander parallelen optisch funktionalen Flächen senkrechte zur Abbildung beitragende optisch funktionale Fläche vorzusehen, die dann beispielsweise zwischen den beiden Zylinderlinsenarrays angeordnet werden kann.

Erfindungsgemäß besteht die Möglichkeit, daß die optisch funktionalen Flächen eine sphärische oder eine asphärische Zylinderlinsengeometrie aufweisen, wobei insbesondere elliptische, parabelförmige oder hyperbolische Geometrien als asphärische Zylinderlinsengeometrien verwendet werden können.

Es besteht weiterhin die Möglichkeit, eine Spaltmaske oder Lochmaske vorzusehen, in der Spalte oder Löcher in Richtung der Längserstreckung der als Gegenstand dienenden Lichtquelle nebeneinander angeordnet sind, so daß zusätzlich zu dem vorgenannten Effekt, der ein Überlappen von von verschiedenen Abschnitten ausgehenden Lichtstrahlen in der Bildebene unterdrückt, ein derartiges Überlappen noch stärker unterdrückt wird.

Weitere Vorteile und Merkmale der vorliegenden Erfindung werden deutlich anhand der nachfolgenden Beschreibung bevorzugter Ausführungsbeispiele unter Bezugnahme auf die beiliegenden Abbildungen. Darin zeigen
- Fig. 1a: eine Seitenansicht einer erfindungsgemäßen Abbildungsvorrichtung;
- Fig. 1b: eine Draufsicht auf die Abbildungsvorrichtung gemäß Fig. 1a;
- Fig. 2a: eine Seitenansicht der Abbildungsvorrichtung gemäß Fig. 1a mit schematischen Strahlengang;
- Fig. 2b: eine Draufsicht auf die Abbildungsvorrichtung gemäß Fig. 2a mit schematischem Strahlengang.

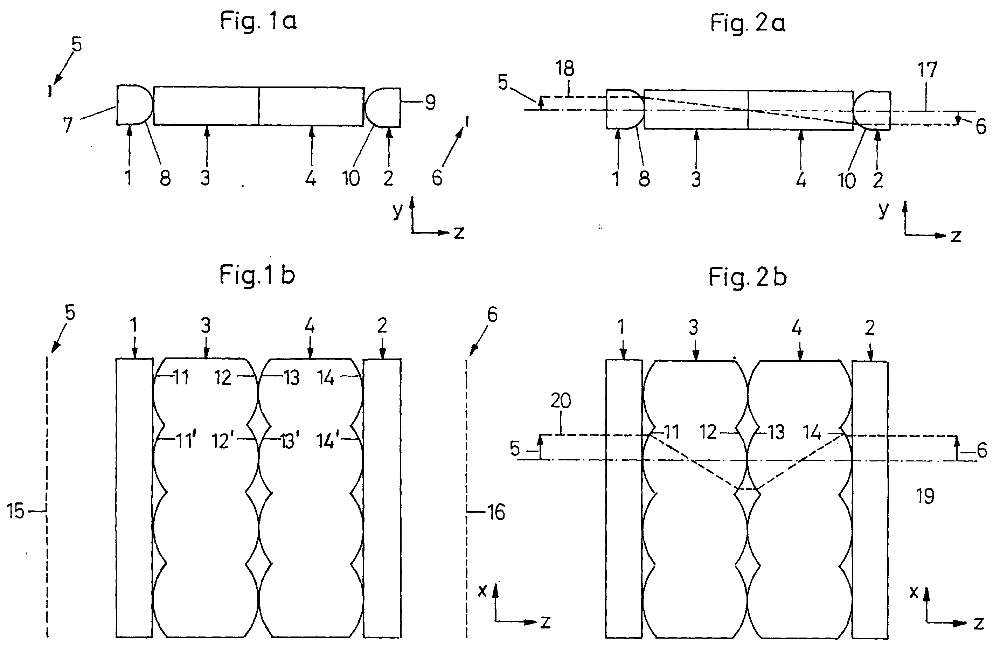

Zunächst wird auf Fig. 1 Bezug genommen. Wie aus Fig. 1 ersichtlich ist, umfaßt das abgebildete Ausführungsbeispiel einer erfindungsgemäßen Abbildungsvorrichtung zwei jeweils außen angeordnete Zylinderlinsen 1, 2, deren Zylinderachsen sich in dem beispielhaft eingezeichneten Koordinatensystem in X-Richtung erstrecken. Zwischen diesen beiden äußeren Zylinderlinsen 1, 2 sind zwei Zylinderlinsenarrays 3, 4 angeordnet, bei denen sich die Zylinderachsen in Y-Richtung erstrecken. Weiterhin ist in Fig. 1a und Fig. 1b jeweils auf der linken Seite ein Objekt 5 und auf der rechten Seite der Abbildungsvorrichtung ein Bild 6 abgebildet.

Die Zylinderlinsen 1, 2 weisen jeweils eine außenliegende plane Fläche 7, 9 sowie eine innenliegende, den Zylinderlinsenarrays 3, 4 zugewandte, Zylinderfläche 8, 10 auf, die als optisch funktionale Fläche dient. Die Zylinderlinsenarrays 3, 4 weisen in X-Richtung miteinander fluchtende nebeneinander angeordnete Zylinderlinsen auf, die jeweils bikonvex ausgeführt sind und Zylinderflächen 11, 12, 13, 14 umfassen. In Fig. 1b sind auch Zylinderflächen 11', 12', 13', 14' eingezeichnet, die die Zylinderflächen der nächsten Zylinderlinsen der Arrays 3, 4 darstellen.

In dem abgebildeten Ausführungsbeispiel berühren die Zylinderflächen 8, 10 die ihnen benachbarten Zylinderflächen 11, 11', 14, 14' der Zylinderlinsenarrays. Weiterhin berühren sich die einander zugewandten Zylinderflächen 12, 12', 13, 13' der Zylinderlinsenarrays 3, 4.

Wie aus Fig. 1 ersichtlich ist, wird der Gegenstand 5 durch die erfindungsgemäße Abbildungsvorrichtung in der entsprechenden Bildebene als im wesentlichen dem Gegenstand 5 entsprechendes Bild 6 abgebildet, so daß, dessen Ausdehnung in Y- beziehungsweise in X-Richtung etwa gleich groß ist. In dem in Fig. 1 abgebildeten Ausführungsbeispiel stellt der Gegenstand 5 eine in X-Richtung im wesentlichen linienförmig ausgedehnte Lichtquelle dar, die derart strukturiert ist, daß sie in X-Richtung einzelne voneinander beabstandete Abschnitte 15 aufweist. Wie aus Fig. 1b ersichtlich ist, werden diese Abschnitte 15 in der Bildebene mit im wesentlichen gleichen Abstand und gleicher Anordnung als Abschnitte 16 des Bildes 6 wiedergegeben. Aus Fig. 1a ist ersichtlich, daß die Ausdehnung des Gegenstandes in Y-Richtung relativ gering ist, wobei das Bild 6 in Y-Richtung zwar die gleiche Ausdehnung aufweist, aber etwas in negative Y-Richtung versetzt ist.

Aus Fig. 2a wird deutlich, daß es sich um eine 1:-1-Abbildung handelt, da das Bild 6 zwar die gleiche Größe wie der Gegenstand 5 aufweist, aber im Gegensatz zu dem Gegenstand 5 von der optischen Achse 17 in der Y-Z-Ebene nach unten gerichtet ist. Der entsprechende Strahlengang 18 ist in Fig. 2a eingezeichnet. Der Abbildung läßt sich entnehmen, daß als optisch funktionale Flächen die Zylinderflächen 8, 10 der Zylinderlinsen 1, 2 Verwendung finden. In dem abgebildeten Ausführungsbeispiel entspricht der Abstand zwischen den beiden Zylinderflächen 8, 10 der doppelten Brennweite der beiden Zylinderflächen 8, 10, wobei deren Brennweite gleich groß ist. Auf diese Weise ergibt sich eine 1:-1-Abbildung genau dann, wenn der Gegenstand 5 in der in Fig. 2a linken Brennebene der Zylinderfläche 8 angeordnet ist. In diesem Fall entsteht das Bild 6 in der in Fig. 2a rechten Brennebene der Zylinderfläche 10.

In Fig. 2b sind eine optische Achse 19 und ein Strahlengang 20 in der X-Z-Ebene eingezeichnet. Als optisch funktionale Flächen dienen die hier beispielhaft ausgewählten Zylinderflächen 11, 12, 13, 14, wobei der Abstand der jeweils zu einem der Zylinderlinsenarrays 3, 4 gehörigen Zylinderflächen 11, 12, und 13, 14 zueinander jeweils der doppelten Brennweite der identische Brennweiten aufweisenden Zylinderflächen 11, 12, 13, 14 beträgt. Wie aus Fig. 2b ersichtlich ist, ergibt sich genau dann eine 1:1-Abbildung von Gegenstand 5 und Bild 6, wenn sich der Gegenstand 5 in einem Abstand, der der doppelten Brennweite entspricht, links von der äußersten linken Zylinderfläche 11 befindet. In diesem Fall entsteht das Bild 6 in einem Abstand, der der doppelten Brennweite entspricht, rechts von der äußerst rechten Zylinderfläche 14.

Es besteht die Möglichkeit, die abgebildete Ausführungsform der Abbildungsvorrichtung zu variieren. Beispielsweise können anstelle von sphärischen Zylinderflächen 8, 9, 11, 12, 13, 14 asphärische Zylinderflächen, beispielsweise elliptische parabelförmige oder hyperbolische Zylinderflächen genutzt werden. Weiterhin besteht die Möglichkeit anstelle zweier in X-Richtung ausgerichteter Zylinderlinsen 1, 2 eine einzelne Zylinderlinse beispielsweise in der Mitte zwischen den beiden Zylinderlinsenarrays 3, 4 anzuordnen. Weiterhin besteht auch die Möglichkeit mehr als vier optisch funktionale Zylinderflächen 11, 12, 13, 14 vorzusehen, deren Zylinderachsen in Y-Richtung ausgerichtet sind. Weiterhin besteht die Möglichkeit eine Lochmaske oder ein System von Spalten beispielsweise zwischen den beiden Zylinderlinsenarrays 3, 4 oder auch außerhalb der Zylinderlinsenarrays 3, 4 anzuordnen, um zu verhindern, daß von unterschiedlichen Abschnitten 15 des Gegenstandes 5 ausgesandte Lichtstrahlen in der Bildebene an gleichen Orten zusammengeführt werden. Andererseits wird aufgrund der Verwendung der beiden sich in X-Richtung erstreckenden Zylinderlinsen 1, 2 beidseitig außerhalb der Zylinderlinsenarrays 3, 4 eine derartige Überlagerung von Bildern der Abschnitte 15 des Objektes 5 in der Bildebene weitestgehend vermieden.

## Patentansprüche

1. Abbildungsvorrichtung für die Abbildung von Gegenständen (5) derart, daß ein von der Abbildungsvorrichtung erzeugtes Bild (6) im wesentlichen die gleichen Abmessungen aufweist wie der abzubildende Gegenstand (5), wobei die Abbildungsvorrichtung mindestens vier optisch funktionale zu der Abbildung beitragende Flächen (8, 10, 11, 12, 13, 14) umfaßt, dadurch gekennzeichnet, daß sämtliche optisch funktionale Flächen (8, 10, 11, 12, 13, 14) eine zylinderlinsen- oder zylinderlinsenähnliche Geometrie aufweisen, wobei mindestens vier optisch funktionale zu der Abbildung beitragende Flächen (11, 12, 13, 14) im wesentlichen zueinander parallele Zylinderachsen aufweisen und wobei die Abbildungsvorrichtung mindestens eine weitere optisch funktionale zu der Abbildung beitragende Fläche (8, 10) umfaßt, deren Zylinderachse zu den Zylinderachsen der mindestens vier parallel orientierten Flächen (11, 12, 13, 14) etwa senkrecht ausgerichtet ist.

2. Abbildungsvorrichtung nach Anspruch 1, dadurch gekennzeichnet, daß eine oder mehrere der optisch funktionalen zu der Abbildung beitragenden Flächen (8, 10, 11, 12, 13, 14) konvex geformt ist.

3. Abbildungsvorrichtung nach einem der Ansprüche 1 oder 2, dadurch gekennzeichnet, daß jeweils zwei der mindestens vier optisch funktionalen zu der Abbildung beitragenden im wesentlichen parallel zueinander orientierten Flächen (11, 12, 13, 14) zu einer eingangs- und ausgangsseitig mit einer optisch funktionalen Fläche (11, 12, 13, 14) versehenen Zylinderlinse beziehungsweise einem eingangs-und ausgangsseitig mit einer optisch funktionalen Fläche versehenen Zylinderlinsenarray (3, 4) zusammengefaßt sind.

4. Abbildungsvorrichtung nach einem der Ansprüche 1 bis 3, dadurch gekennzeichnet, daß genau vier zu der Abbildung beitragende optisch funktionale Flächen (11, 12, 13, 14) im wesentlichen zueinander parallele Zylinderachsen aufweisen.

5. Abbildungsvorrichtung nach Anspruch 4, dadurch gekennzeichnet, daß von den genau vier optisch funktionalen Flächen (11, 12, 13, 14) mit im wesentlichen parallelen Zylinderachsen zwei Zylinderlinsenarrays (3, 4) gebildet werden, deren jeweilige optisch funktionale Flächen in nebeneinander angeordnete zylinderlinsenähnliche Abschnitte (11, 11', 12, 12', 13, 13', 14, 14') unterteilt sind.

6. Abbildungsvorrichtung nach einem der Ansprüche 1 bis 5, dadurch gekennzeichnet, daß die Abbildungsvorrichtung in Richtung der im wesentlichen zueinander parallelen Zylinderachsen der mindestens vier optisch funktionalen Flächen (11, 12, 13, 14) eine wesentlich geringere Ausdehnung aufweist als in der zu diesen Zylinderachsen im wesentlichen senkrechten Zylinderachse der mindestens einen weiteren optisch funktionalen Fläche (8, 10).

7. Abbildungsvorrichtung nach einem der Ansprüche 5 oder 6, dadurch gekennzeichnet, daß zwischen den beiden Zylinderlinsenarrays (3, 4) die mindestens eine weitere optisch funktionale zu der Abbildung beitragende Fläche (8, 10) angeordnet ist.

8. Abbildungsvorrichtung nach einem der Ansprüche 1 bis 6, dadurch gekennzeichnet, daß zwei weitere optisch funktionale zu der Abbildung beitragende Flächen (8, 10) mit zu den Zylinderachsen der mindestens vier parallel orientierten Flächen (11, 12, 13, 14) etwa senkrecht ausgerichteten Zylinderachsen vorgesehen sind.

9. Abbildungsvorrichtung nach Anspruch 8, dadurch gekennzeichnet, daß die beiden weiteren zur Abbildung beitragenden optisch funktionalen Flächen (8, 10) jeweils derart an den Außenseiten der Abbildungsvorrichtung angeordnet sind, daß sich die vier im wesentlichen parallel zueinander ausgerichteten zu der Abbildung beitragenden optisch funktionalen Flächen (11, 12, 13, 14) zwischen ihnen befinden.

10. Abbildungsvorrichtung nach einem der Ansprüche 1 bis 9, dadurch gekennzeichnet, daß die optisch funktionalen Flächen (8, 10, 11, 12,13) eine sphärische oder asphärische Zylinderlinsengeometrie aufweisen, wobei insbesondere elliptische, parabelförmige oder hyperbolische Geometrien als asphärische Zylinderlinsengeometrien verwendet werden können.

11. Abbildungsvorrichtung nach einem der Ansprüche 1 bis 10, dadurch gekennzeichnet, daß eine Spaltmaske oder Lochmaske vorgesehen ist, in der Spalte oder Löcher in Richtung des Zylinderachse der mindestens einen weiteren optisch funktionalen Fläche nebeneinander angeordnet sind.
